# EUROPÄISCHE PATENTSCHRIFT

(11) **EP 3 170 379 B1**
(45) Veröffentlichungstag und Bekanntmachung des Hinweises auf die Patenterteilung: **05.08.2020**
(21) Anmeldenummer: 15195903.8
(22) Anmeldetag: 23.11.2015
(51) Int. Cl.: A01B 3/46, A01B 5/10, A01B 15/18

(54) **LANDMASCHINE MIT KETTENTRIEB**
AGRICULTURAL MACHINE WITH CHAIN DRIVE
ENGIN AGRICOLE COMPRENANT UN ENTRAINEMENT DE CHAINE

(43) Veröffentlichungstag der Anmeldung: 24.05.2017
(73) Patentinhaber: Kverneland AS, 4355 Kvernaland (NO)
(72) Erfinder: Kämmerling, Mathias, 59494 Soest (DE); Beckmann, Andreas, 33611 Bielefeld (DE)
(74) Vertreter: Schneider, Sascha

(56) Entgegenhaltungen:
- WO-A1-2015/102497
- DE-A1-102014 006 109
- US-A1- 2012 241 180

## Beschreibung

Die Erfindung betrifft eine Landmaschine gemäß dem Oberbegriff des Anspruchs 1.

Das Problem bei herkömmlichen Landmaschinen ist, dass bei einer Kurvenfahrt ein relativ großer Widerstand besteht, so dass die Fahrt erheblich verlangsamt oder der Untergrund beschädigt werden könnte.

Druckschrift US 2012/0241180 offenbart eine Landmaschine mit einem Kettentrieb. Druckschrift DE 102014006109 A1 offenbart eine Bodenplatte für ein Kettenlaufwerk einer amphibischen Maschine. Druckschrift WO 2015/102497 A1 offenbart eine Tiefenkontrollvorrichtung für Landbearbeitungsmaschinen.

Es ist daher die Aufgabe der vorliegenden Erfindung, eine Landmaschine zur Verfügung zu stellen, welche die Nachteile des Stands der Technik nicht aufweist und bei dem insbesondere eine verbesserte Kurvenfahrt möglich ist.

Diese Aufgabe wird mit der Landmaschine gemäß dem Anspruch 1 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. Bei angegebenen Wertebereichen sollen auch innerhalb der genannten Grenzen liegende Werte als Grenzwerte offenbart oder in beliebiger Kombination beanspruchbar sein.

Erfindungsgemäß weist die Landmaschine mindestens einen, insbesondere höhenverstellbaren, Kettentrieb mit Kettengliedern auf, wobei die Kettenglieder zumindest bereichsweise abgeschrägt und/oder zumindest bereichsweise biegsam ausgebildet sind.

Es ist der Kern der Erfindung, dass durch die Abschrägung beziehungsweise Biegsamkeit der Kettenglieder bei einer Kurvenfahrt die Kontaktfläche der Kettenglieder, die den Untergrund berühren, minimiert wird, so dass auch der Widerstand bei der Kurvenfahrt auf das Geringste reduziert werden kann. Dadurch wird vorteilhaft die Fahrt kaum abgebremst und der Untergrund kann geschont werden. Außerdem verringert sich der Verschleiß der Kettenglieder.

Der mindestens eine Kettentrieb kann passiv ausgebildet sein. Alternativ kann er seinen eigenen Antrieb aufweisen.

Die Landmaschine kann beispielsweise als Pflug, Sämaschine, Schwadgerät oder Heuwender ausgebildet sein.

Die Lenkung der Landmaschine kann beispielsweise über eine Gewichtsverlagerung erfolgen. Es sind aber auch andere Lenkungsmöglichkeiten denkbar. Die Kettenglieder können aus jedem Material, beispielsweise Holz, Metall, Kunststoff und/oder Gummi, aber auch aus anderen Materialien gefertigt sein. Die Kettenglieder können auch aus mehreren Materialien ausgebildet sein. Die Landmaschine kann noch weitere Bestandteile aufweisen.

Erfindungsgemäß können die Kettenglieder zumindest bereichsweise abgeschrägt oder zumindest bereichsweise biegsam oder zumindest bereichsweise abgeschrägt und zumindest bereichsweise biegsam ausgebildet sein.

Gemäß einer bevorzugten Ausführungsform weisen die Kettenglieder seitlich an ihren Enden abgeschrägte Bereiche und/oder elastische Bereiche auf. Im Folgenden wird der Begriff biegsam und elastisch synonym verwendet. Alternativ können die Kettenglieder vollständig abgeschrägt ausgebildet sein und/oder vollständig biegsam ausgebildet sein. Insbesondere können die abgeschrägten Bereiche und/oder die elastischen Bereiche eines Kettengliedes identisch ausgebildet sein. In einer ganz besonderen Ausführungsform sind alle Kettenglieder identisch ausgebildet.

Insbesondere können die abgeschrägten Bereiche zur Horizontalen abgewinkelt sein, bevorzugt mit einem Winkel > 1°, besonders bevorzugt > 5°, ganz besonders bevorzugt > 10°, noch weiter bevorzugt >15°, am bevorzugtesten > 20°.

In einer besonders bevorzugten Ausführungsform sind die abgeschrägten Bereiche rund ausgebildet. Rund ausgebildet kann zum Beispiel heißen, dass sie kreisförmig oder elliptisch ausgebildet sind, jedenfalls ohne Kanten oder Ecken.

In einer anderen Ausführungsform ist es vorgesehen, dass die abgeschrägten Bereiche nach außen hin spitz zulaufend ausgebildet sind. Dadurch ist der Widerstand besonders effizient verringerbar.

Insbesondere können die Kettenglieder mittig einen horizontal verlaufenden Abschnitt mit einer horizontal verlaufenden Oberfläche aufweisen. An diesem Abschnitt können sich nach außen hin ein oder mehrere abgeschrägte und/oder elastische Bereiche anschließen. Dieser horizontale Abschnitt ermöglicht vorteilhaft einen guten Kontakt mit dem Untergrund und dadurch eine verbesserte Kraftübertragung. Insbesondere kann es vorgesehen sein, dass die Länge der abgeschrägten Bereiche eines Kettengliedes größer ist als die Länge des horizontalen Abschnitts. Dadurch kann der Widerstand bei einer Kurvenfahrt auf ein Minimum reduziert werden.

In einer anderen Ausführungsform weist die Landmaschine bzw. der Kettentrieb eine konische Tonnenrolle auf. Insbesondere kann die Tonnenrolle zu ihren beiden Enden hin konisch zulaufen. Die Landmaschine bzw. der Kettentrieb kann auch mehrere Tonnenrollen aufweisen. Die Tonnenrolle kann insbesondere mit ihrer Längsachse senkrecht zur Längsachse der Landmaschine angeordnet sein. Außerdem können insbesondere ihre beiden Enden bündig mit dem äußeren Ende der Kettenglieder abschließen. Mit konisch ist verjüngend beziehungsweise spitz zulaufend gemeint. Die Kettenglieder können insbesondere lediglich auf einem Teil der Oberfläche der Tonnenrolle aufliegen. Dabei ist zu beachten, dass zu einem bestimmten Zeitpunkt in Betrieb immer nur ein Teil der Kettenglieder überhaupt mit der Tonnenrolle in Berührung kommt und die übrigen Kettenglieder nicht mit der Tonnenrolle in Kontakt stehen. Bei der Geradeausfahrt kontaktieren die Kettenglieder, die mit der Tonnenrolle zum jeweiligen Zeitpunkt in Kontakt stehen, die Tonnenrolle in ihrem mittleren Bereich. Bei einer Kurvenfahrt liegen die Kettenglieder seitlich an dem jeweiligen spitz zulaufenden Ende der Tonnenrolle an. Mit anderen Worten: bei einer Kurvenfahrt nach rechts liegen die Kettenglieder am rechten konischen Ende der Tonnenrolle an, bei einer Kurvenfahrt nach links liegen die Kettenglieder am linken konischen Ende der Tonnenrolle an.

Insbesondere ist es vorgesehen, dass die Tonnenrolle in Fahrtrichtung hinten angeordnet ist, wodurch eine verbesserte Lenkung möglich ist. Wenn die Landmaschine sowohl rückwärts als auch vorwärts fahren kann, so ist sowohl hinten als auch vorne eine Tonnenrolle angeordnet, so dass bei beiden Fahrtrichtungen eine optimale Lenkung möglich ist. Insbesondere kontaktiert die Tonnenrolle die Kettenglieder mit ihrer unteren Oberfläche, wobei die Tonnenrolle oberhalb der Kettenglieder angeordnet ist, welche den Untergrund kontaktieren.

In einer anderen Ausführungsform weist der Kettentrieb ein umlaufendes Band auf, welches mit einer Vielzahl an Kettengliedern versehen ist. Das Band ist elastisch und biegsam ausgebildet; ebenso sind die Kettenglieder elastisch und biegsam ausgebildet. Die Kettenglieder sind derart elastisch und biegsam ausgebildet, dass bei einer Gewichtsverlagerung durch die Landmaschine die Kettenglieder verbogen werden können, um die Kontaktfläche zwischen dem Untergrund und den Kettengliedern zu verringern. Dadurch kann vorteilhaft der Reibungswiderstand beim Lenken erheblich verringert werden, so dass der Energieaufwand vorteilhaft verringert werden kann. Im Übrigen wird auf die obigen Ausführungen verwiesen.

Weitere Vorteile, Merkmale und Einzelheiten der Erfindung ergeben sich aus der nachfolgenden Beschreibung bevorzugter Ausführungsbeispiele sowie anhand der Zeichnungen.

Die Figuren zeigen schematisch:
- Figur 1: zeigt eine erste Ausführungsform eines erfindungsgemäßen Kettentriebs,
- Figur 2: zeigt eine zweite Ausführungsform,
- Figur 3: zeigt die Ausführungsform aus Figur 2 in einer Seitenansicht bei Geradeausfahrt,
- Figur 4: zeigt die Ausführungsform aus Figur 2 bei einer Kurvenfahrt,
- Figur 5a: zeigt eine dritte Ausführungsform der vorliegenden Erfindung in einer perspektivischen Ansicht von hinten bei Geradeausfahrt,
- Figur 5b: zeigt die dritte Ausführungsform in einer Seitenansicht,
- Figur 5c: zeigt die dritte Ausführungsform in einer Seitenansicht bei einer Kurvenfahrt,
- Figur 6a: zeigt eine erfindungsgemäße Landmaschine in einer perspektivischen Ansicht von hinten und oben,
- Figur 6b: zeigt die Landmaschine in einer Ansicht von hinten,
- Figur 6c: zeigt die Landmaschine in einer perspektivischen Ansicht ohne Säschare,
- Figur 6d: zeigt die Landmaschine in einer Draufsicht,
- Figur 7a: zeigt eine andere erfindungsgemäße Landmaschine in einer perspektivischen Ansicht,
- Figur 7b: zeigt einen Ausschnitt der Landmaschine aus Figur 7a,
- Figur 7c: zeigt eine Seitenansicht der Landmaschine,
- Figur 7d: zeigt eine Draufsicht der Landmaschine,
- Figur 8a: zeigt eine Seitenansicht eines erfindungsgemäßen Kettentriebes mit Höhenverstellung und
- Figur 8b: zeigt den Kettentrieb mit Höhenverstellung in einer Vorderansicht.

In den Figuren sind gleiche und/oder gleichwirkende Elemente mit den gleichen Bezugszeichen gekennzeichnet.

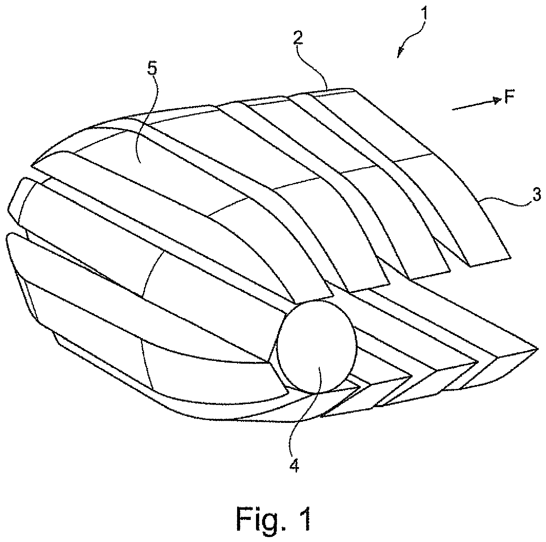

Figur 1 zeigt schematisch einen Teil eines Kettentriebs 1 in einer perspektivischen Ansicht von oben gemäß einer ersten beispielhaften Ausführungsform.

Die Figur 1 zeigt einen Kettentrieb 1 mit einer Vielzahl von miteinander verbundenen Kettengliedern 2, die parallel zueinander hintereinander angeordnet sind und um eine Rolle 4 und weitere nicht dargestellte Rollen drehen. Die Figur 1 zeigt einen hinteren Bereich des Kettentriebs 1, wobei sich der Kettentrieb 1 in der mit dem Pfeil dargestellten Fahrtrichtung F bewegen kann beziehungsweise bewegt. Die Kettenglieder 2 weisen mittig einen horizontal ausgerichteten Bereich 5 auf, mit dem die Kettenglieder 2 den nicht dargestellten Untergrund berühren. An den beiden seitlichen Enden der Kettenglieder 2 sind abgeschrägte beziehungsweise abgerundete Bereiche 3 angeordnet.

Sobald das Gewicht zur Kurvenfahrt beispielsweise nach hinten links verlagert wird, dreht sich der Kettentrieb 1 nach links auf die abgerundeten Bereiche 3, wodurch die Kontaktfläche zum Untergrund erheblich verringert wird. Nun kann der Richtungswechsel einfach stattfinden, weil der Kettentrieb 1 lediglich um eine relativ geringe Fläche gedreht werden muss.

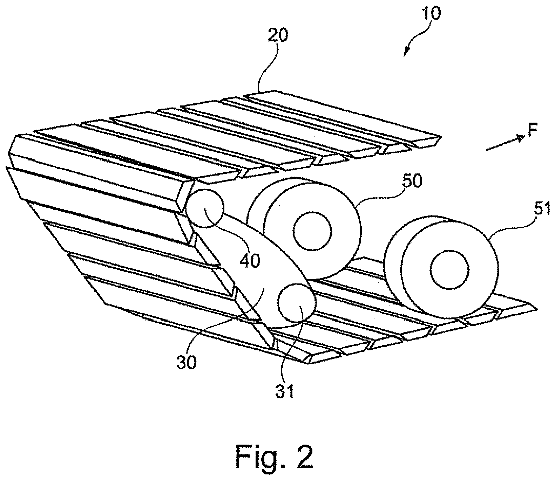

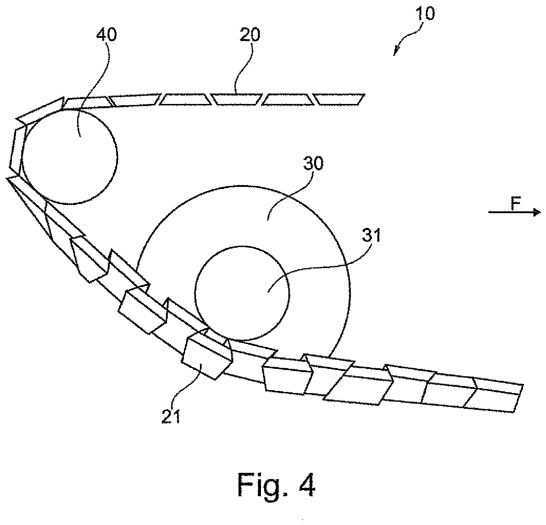

Figur 2 zeigt einen Teil beziehungsweise einen Kettentrieb 10 gemäß einer zweiten beispielhaften Ausführungsform. In dieser Ausführungsform sind die miteinander verbundenen Kettenglieder 20 biegsam beziehungsweise elastisch ausgebildet, zumindest in ihren beiden Enden. Die Kettenglieder 20 weisen biegsame bzw. elastische Bereiche 21 auf (siehe Figur 4). Im hinteren Bereich, das heißt derjenige Bereich, der der Fahrtrichtung F abgewandt ist, ist eine obere Rolle 40 und eine unten angeordnete Tonnenrolle 30 angeordnet. Außerdem sind beispielhaft noch zwei Räder 50, 51 angedeutet, über die die Kettenglieder 20 weitergeführt werden. Die Kettenglieder 20 rotieren also im Betrieb um die Rollen 30, 40, 50 und 51 herum.

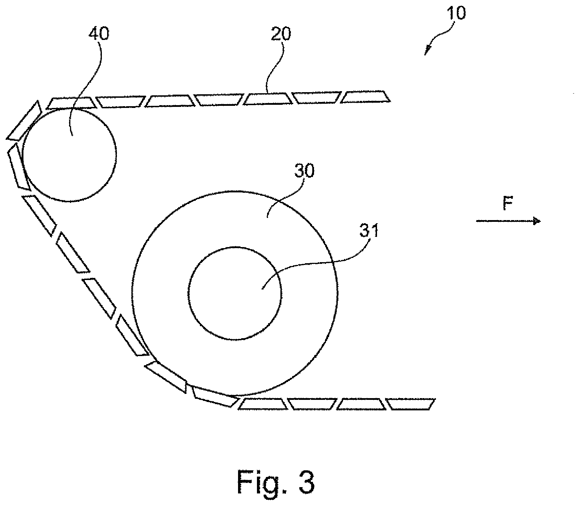

Die Tonnenrolle 30 ist zu beiden Enden hin konisch ausgebildet, so dass sie sich zu ihren äußeren Enden hin verjüngt. Mit dem Bezugszeichen 31 ist eine Stirnfläche 31 bezeichnet, deren Querschnitt kleiner ist als der Querschnitt der Tonnenrolle 30 im mittleren Bereich. Die Tonnenrolle 30 kontaktiert in der Geradeausfahrt (siehe Figur 3) mit ihrem mittleren Bereich die Kettenglieder 20, so dass eine optimale Kraftübertragung zwischen der Tonnenrolle 30 und den Kettengliedern 20 möglich ist. Die Kettenglieder 20 sind auch in dieser Ausführungsform parallel zueinander hintereinander angeordnet.

Figur 3 und Figur 4 zeigen den Kettentrieb 10 in einer seitlichen Ansicht. In der Figur 3 ist die Geradeausfahrt in der Fahrtrichtung F dargestellt. In der Figur 4 ist eine Kurvenfahrt nach rechts dargestellt. Durch die Gewichtsverlagerung nach rechts werden die Kettenglieder 20 in den gebogenen Bereichen 21 umgebogen, so dass die umgebogenen Bereiche 21 an den konischen Enden der Tonnenrolle 30 anliegen. Dabei kippt der Kettentrieb 10 auf die umgebogenen Bereiche 21, wodurch die Kontaktfläche und der Reibwiderstand zwischen Kettengliedern 20 und Untergrund minimiert werden. Im Übrigen wird auf die obigen Ausführungen zu den Figuren 2 bis 3 verwiesen.

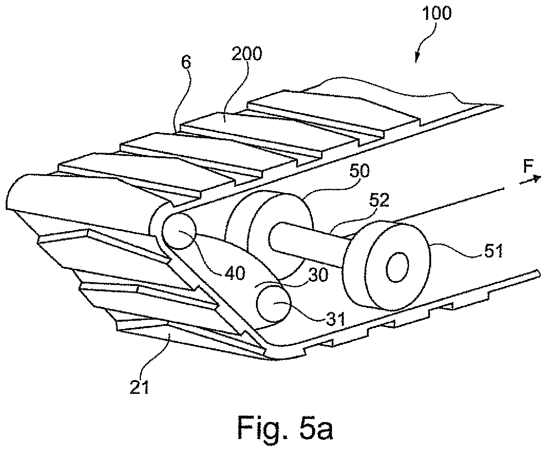

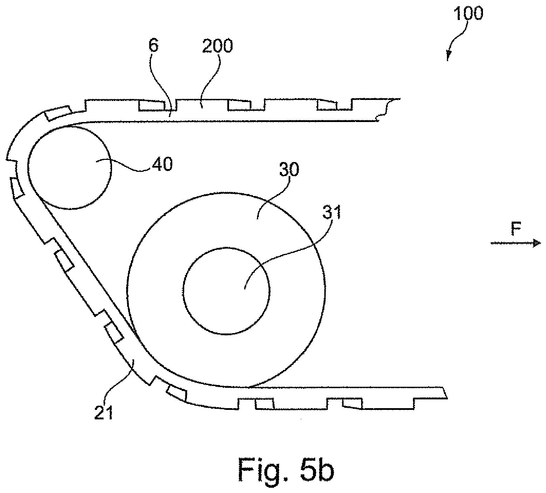

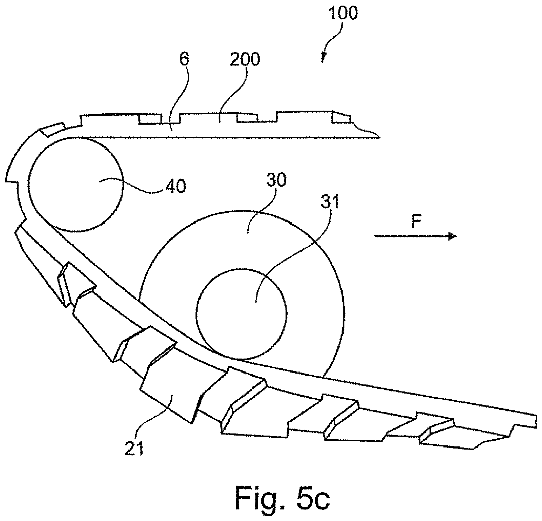

Figur 5a zeigt eine dritte Ausführungsform der vorliegenden Erfindung in einer perspektivischen Ansicht von hinten bei Geradeausfahrt in der Fahrtrichtung F. Figur 5b zeigt die dritte Ausführungsform in einer Seitenansicht und Figur 5c zeigt die dritte Ausführungsform in einer Seitenansicht bei einer Kurvenfahrt.

In dieser Ausführungsform weist der Kettentrieb 100 ein umlaufendes Band 6 auf, welches mit einer Vielzahl an Kettengliedern 200 versehen ist. Das Band 6 ist elastisch und biegsam ausgebildet; ebenso sind die Kettenglieder 200 elastisch und biegsam ausgebildet.

Im hinteren Bereich, das heißt derjenige Bereich, der der Fahrtrichtung F abgewandt ist, ist eine obere Rolle 40 und eine unten angeordnete Tonnenrolle 30 angeordnet. Außerdem sind beispielhaft noch zwei über eine Achse 52 verbundene Räder 50, 51 angedeutet, über die die Kettenglieder 20 weitergeführt werden. Die Kettenglieder 200 rotieren bzw. das umlaufende Band 6 rotiert also im Betrieb um die Rollen 40, 30, 50 und 51 herum.

Die Tonnenrolle 30 ist zu beiden Enden hin konisch ausgebildet, so dass sie sich zu ihren äußeren Enden hin verjüngt. Mit dem Bezugszeichen 31 ist eine Stirnfläche 31 bezeichnet, deren Querschnitt kleiner ist als der Querschnitt der Tonnenrolle 30 im mittleren Bereich. Die Tonnenrolle 30 kontaktiert in der Geradeausfahrt (siehe Figur 5a und 5b) mit ihrem mittleren Bereich die Kettenglieder 200, so dass eine optimale Kraftübertragung zwischen der Tonnenrolle 30 und den Kettengliedern 200 möglich ist. Die Kettenglieder 200 sind auch in dieser Ausführungsform parallel zueinander hintereinander angeordnet.

In der Figur 5c ist eine Kurvenfahrt nach rechts dargestellt. Durch die Gewichtsverlagerung nach rechts werden die Kettenglieder 200 in den gebogenen Bereichen 21 umgebogen, so dass die umgebogenen Bereiche 21 an den konischen Enden der Tonnenrolle 30 anliegen. Dabei kippt der Kettentrieb 100 auf die umgebogenen Bereiche 21, wodurch die Kontaktfläche und der Reibwiderstand zwischen Kettengliedern 200 und Untergrund minimiert werden. Im Übrigen wird auf die obigen Ausführungen zu den Figuren 5a und 5b verwiesen.

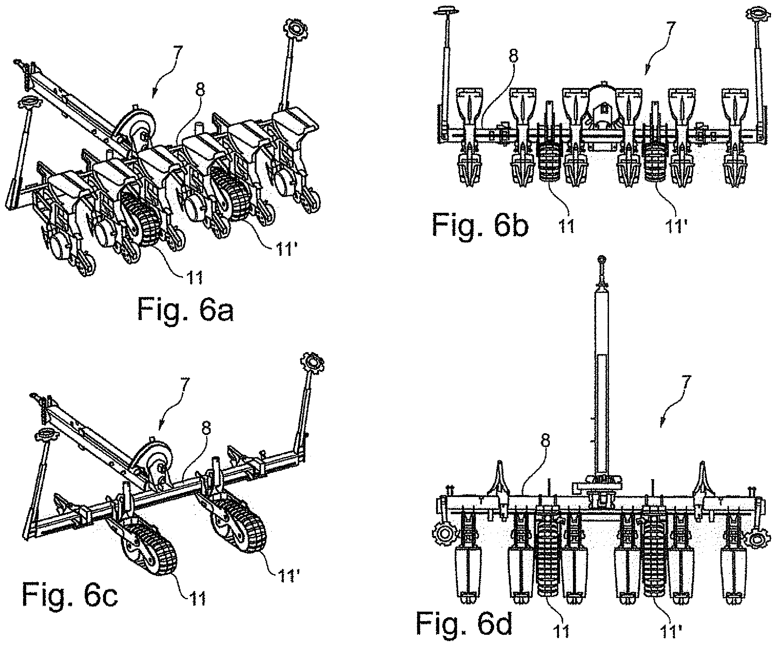

Die Figuren 6a bis 6d zeigen eine erfindungsgemäße Landmaschine 7, die eine Scharschiene 8 aufweist. Die Landmaschine 7 kann beispielsweise von einem Traktor gezogen werden.

Die Figur 6a zeigt die Landmaschine 7 in einer perspektivischen Ansicht von oben und hinten. Die Landmaschine 7 weist die aus dem Stand der Technik grundsätzlich bekannte Scharschiene 8 auf. Die Landmaschine 7 weist zwei Kettentriebe 11, 11' auf, die in Kontakt mit dem Boden stehen und zur Abstützung der Scharschiene 8 auf dem Boden dienen. Die Kettentriebe 11, 11' können passiv ausgebildet sein, alternativ können sie mit einem eigenen Antrieb aktiv antreibend ausgebildet sein. In einer optionalen Ausführungsform sind die Kettentriebe 11, 11' höhenverstellbar ausgebildet.

Die Figur 6b zeigt die Landmaschine 7 in einer Ansicht von hinten, die Figur 6c zeigt die Landmaschine 7 in einer perspektivischen Darstellung wie Figur 6a ohne Säschare und Figur 6d zeigt die Landmaschine 7 in einer Draufsicht.

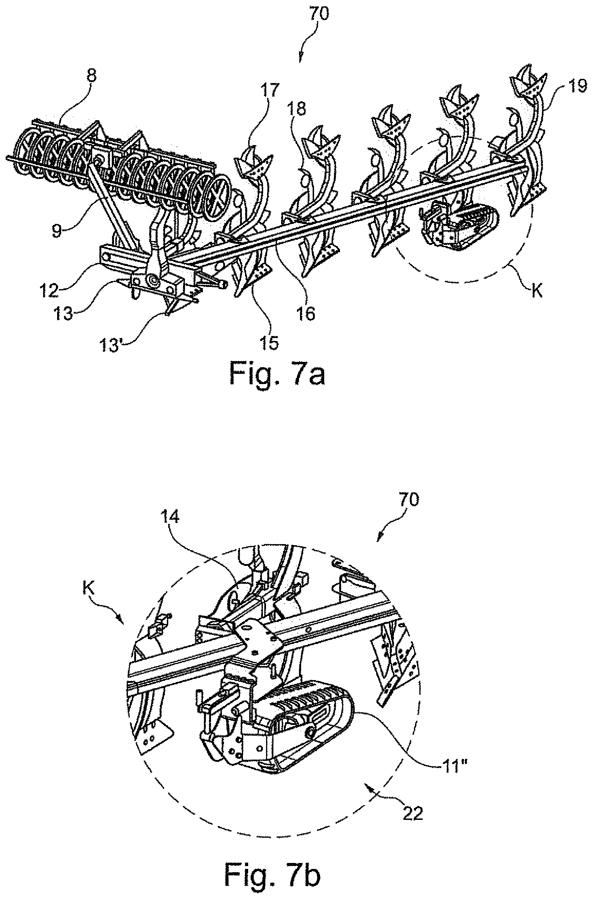

Die Figur 7a zeigt eine andere erfindungsgemäße Ausführungsform der Landmaschine 70. Bei der Landmaschine 70 handelt es sich um einen Pflug.

In einer aus dem Stand der Technik bekannten Weise weist der Pflug 70 einen Packer 8, der über einen Tragarm 9 an einer Quertraverse 12 befestigt ist. Die Landmaschine 70 kann über Unterlenkerbolzen 13, 13' mit einer Zugmaschine verbunden werden. Der Pflug weist weiterhin beispielsweise ein Pflugschar 15, einen Pflugkörper 17, einen Vorschäler 18, ein Grindel 19 auf, die an einem Rahmen 16 befestigt sind.

Mit dem Bezugszeichen K ist ein Kreis markiert, der einen Ausschnitt angibt, der in der Figur 7b größer dargestellt ist. Der Pflug 70 weist weiterhin beispielsweise eine Blattfedersicherung 14 auf sowie einen erfindungsgemäßen Kettentrieb 11". Die Sicherung könnte beispielsweise alternativ als Bolzen mit Sollbruchstelle ausgebildet sein. Der Kettentrieb 11" ist über eine Höhenverstellung 22 höhenverstellbar und schwenkbar gelagert.

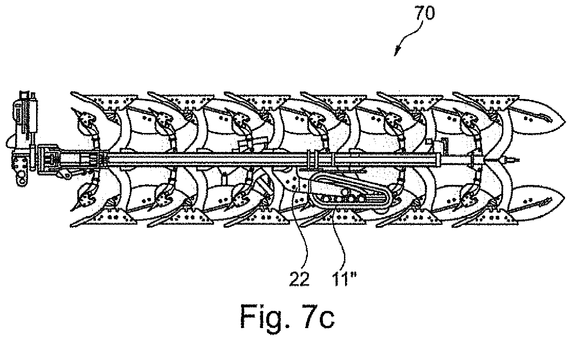

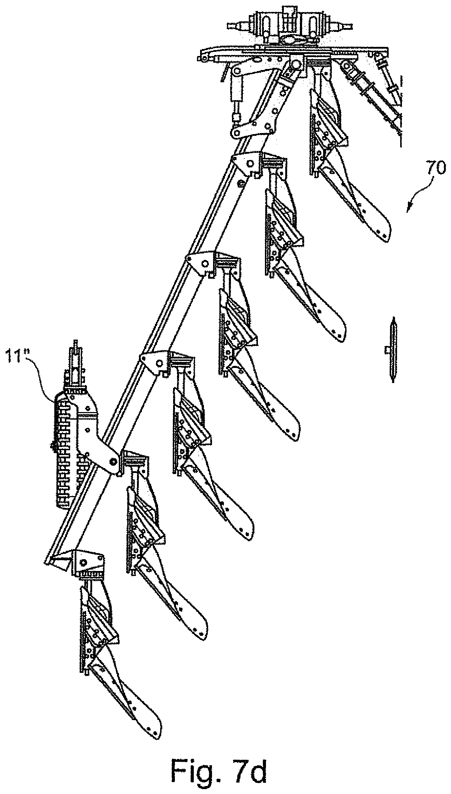

Die Figur 7c zeigt den Pflug 70 in einer Seitenansicht und die Figur 7d zeigt den Pflug 70 in einer Draufsicht.

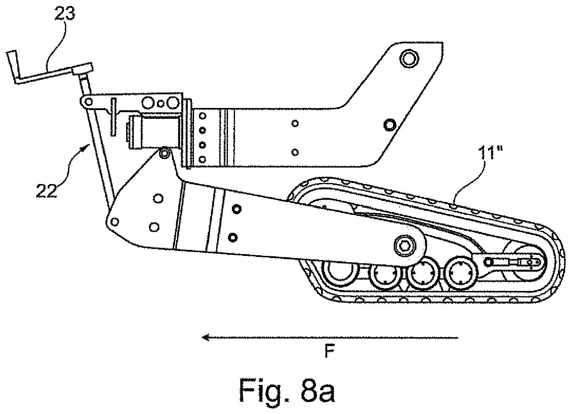

Figur 8a zeigt den Kettentrieb 11' mit der Höhenverstellung 22 in einer Seitenansicht. Die Höhenverstellung wird über eine mechanische Kurbel 23 betätigt. Alternativ kann statt der Kurbel 23 auch eine hydraulische Verstellung angeordnet sein, beispielsweise durch einen hydraulischen Zylinder, was den Vorteil hat, dass die Höhenverstellung von der Zugmaschine aus betätigt werden kann.

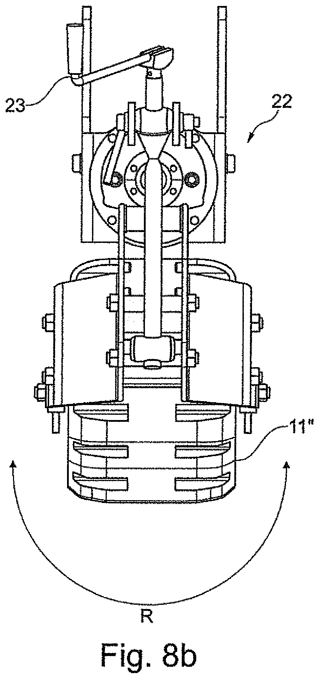

Die Figur 8b zeigt den Kettentrieb 11" mit der Höhenverstellung 22 in einer Vorderansicht. Der Kettentrieb 11" kann über eine Mittelachse mit einer entsprechenden Lagerung rotieren (siehe Doppelpfeil R, der die Rotationsrichtung angibt), wenn der Pflug 70 von einer zur anderen Seite gedreht wird. Darüber hinaus kann der Kettentrieb 11" in der mittleren Position arretiert werden, um den Kettentrieb 11" in einer Transportposition zu befestigen.

Der beschriebene Pflug 70 ist ein befestigter reversibler Pflug, wie aus dem Stand der Technik bekannt ist. Der Kettentrieb 11" ist am Rahmen 16 des Pflugs 70 befestigt. Der Vorteil daran ist, dass der Kettentrieb 11" unterhalb des Rahmens 16 angeordnet werden kann, so dass dieser, im Vergleich zu bekannten Rädern, nicht gegen Hindernisse außerhalb des Rahmens stoßen kann. Außerdem hat der Kettentrieb 11" einen größeren Kontaktbereich zum Boden als ein konventionelles Rad, wodurch der Druck auf den Boden verringert und die Bodenverdichtung reduziert werden kann.

### Bezugszeichenliste

- 1, 10, 100: Kettentrieb
- 2, 20, 200: Kettenglieder
- 3: abgeschrägter Bereich
- 4, 40: Rolle
- 5: horizontale Oberfläche/horizontaler Abschnitt
- 6: umlaufendes Band
- 7, 70: Landmaschine
- 8: Packer
- 9: Tragarm
- 11, 11', 11": Kettentrieb
- 12: Quertraverse
- 13, 13': Unterlenkerbolzen
- 14: Blattfedersicherung
- 15: Pflugschar
- 16: Rahmen
- 17: Pflugkörper
- 18: Vorschäler
- 19: Grindel
- 21: biegsamer Bereich
- 22: Höhenverstellung
- 30: konische Tonnenrolle
- 31: Stirnfläche
- 50, 51: Räder
- 52: Achse
- F: Fahrtrichtung
- K: Kreisausschnitt
- R: Schwenkrichtung

## Patentansprüche

1. Landmaschine (7, 70), aufweisend mindestens einen, insbesondere höhenverstellbaren, Kettentrieb (1, 11, 11', 11", 10, 100) mit Kettengliedern (2, 20, 200), wobei die Kettenglieder (2, 20, 200) zumindest bereichsweise abgeschrägt und/oder zumindest bereichsweise biegsam ausgebildet sind, **dadurch gekennzeichnet, dass** die Kettenglieder (2, 20, 200) seitlich an ihren Enden rund ausgebildete abgeschrägte Bereiche (3) aufweisen und/oder der Kettentrieb (1, 11, 11', 11", 10, 100) eine konische Tonnenrolle (30) aufweist.

2. Landmaschine (7, 70) nach Anspruch 1, **dadurch gekennzeichnet, dass** die Kettenglieder (2, 20, 200) seitlich an ihren Enden biegsame Bereiche (21) aufweisen.

3. Landmaschine (7, 70) nach Anspruch 2, **dadurch gekennzeichnet, dass** die abgeschrägten und/oder biegsamen Bereiche (3) identisch ausgebildet sind.

4. Landmaschine (7, 70) nach Anspruch 2 oder 3, **dadurch gekennzeichnet, dass** die abgeschrägten Bereiche (3) zur Horizontalen abgewinkelt ausgebildet sind, bevorzugt mit einem Winkel > 1°, besonders bevorzugt > 5°, ganz besonders bevorzugt > 10°, noch weiter bevorzugt >15°, am bevorzugtesten > 20°.

5. Landmaschine (7, 70) nach einem der Ansprüche 2 bis 4, **dadurch gekennzeichnet, dass** die abgeschrägten Bereiche (3) rund ausgebildet sind.

6. Landmaschine (7, 70) nach einem der Ansprüche 2 bis 5, **dadurch gekennzeichnet, dass** die abgeschrägten Bereiche (3) nach außen hin spitz zulaufend ausgebildet sind.

7. Landmaschine (7, 70) nach einem der vorhergehenden Ansprüche, **dadurch gekennzeichnet, dass** Kettenglieder (2, 20, 200) mittig einen horizontal verlaufenden Abschnitt (5) mit einer horizontal verlaufenden Oberfläche aufweisen.

8. Landmaschine (7, 70) nach Anspruch 7, **dadurch gekennzeichnet, dass** pro Kettenglied (2, 20, 200) die Länge der abgeschrägten Bereiche (3) größer ist als die Länge des horizontalen Abschnitts (5).

9. Landmaschine (7, 70) nach einem der vorhergehenden Ansprüche, **dadurch gekennzeichnet, dass** die Kettenglieder (2, 20, 200) zumindest an ihren Enden elastisch ausgebildet sind.

10. Landmaschine (7, 70) nach Anspruch 1, **dadurch gekennzeichnet, dass** die Tonnenrolle (30) zu seinen beiden Enden hin konisch zuläuft.

11. Landmaschine (7, 70) nach Anspruch 1 oder 10, **dadurch gekennzeichnet, dass** die Kettenglieder (2, 20, 200) lediglich auf einem Teil der Oberfläche der Tonnenrolle (30) aufliegen.

12. Landmaschine (7, 70) nach einem der Ansprüche 1, 10 oder 11, **dadurch gekennzeichnet, dass** die Tonnenrolle (30) in Fahrtrichtung (F) hinten angeordnet ist.

13. Landmaschine (7, 70) nach einem der Ansprüche 1, 10 bis 12, **dadurch gekennzeichnet, dass** die Tonnenrolle (30) die Kettenglieder (2, 20, 200) mit ihrer unteren Oberfläche kontaktiert.

14. Landmaschine (7, 70) nach einem der vorhergehenden Ansprüche, **dadurch gekennzeichnet, dass** der Kettentrieb (1, 11, 11', 11", 10, 100) ein umlaufendes elastisches und biegsames Band (6) aufweist, welches mit einer Vielzahl an elastischen und biegsamen Kettengliedern (200) versehen ist.

## Claims

1. An agricultural machine (7, 70), having at least one, in particular height-adjustable, chain drive (1, 11, 11', 11", 10, 100) with chain links (2, 20, 200), wherein the chain links (2, 20, 200) are bevelled at least in portions and/or designed to be flexible at least in portions, **characterized in that** the chain links (2, 20, 200) have lateral end portions (3) that are bevelled and rounded and/or the chain drive (1, 11', 11", 11", 10, 100) has a conical barrel roller (30).

2. The agricultural machine (7, 70) according to Claim 1, **characterized in that** the lateral end portions (21) of the chain links (2, 20, 200) are flexible.

3. The agricultural machine (7, 70) according to Claim 2, **characterized in that** the bevelled and/or flexible portions (3) are designed identically.

4. The agricultural machine (7, 70) according to Claim 2 or 3, **characterized in that** the bevelled portions (3) are designed at an angle to the horizontal plane, preferably at an angle of >1°, particularly preferably >5°, especially preferably >10°, preferably to an even larger extent >15°, most preferably >20°.

5. The agricultural machine (7, 70) according to any one of Claims 2 to 4, **characterized in that** the bevelled portions (3) are designed to be rounded.

6. The agricultural machine (7, 70) according to any one of Claims 2 to 5, **characterized in that** the bevelled portions (3) are designed to taper toward the outer edge.

7. The agricultural machine (7, 70) according to any one of the preceding claims, **characterized in that** chain links (2, 20, 200) have a central horizontal section (5) with a horizontal surface.

8. The agricultural machine (7, 70) according to Claim 7, **characterized in that**, for each respective chain link (2, 20, 200), the length of the bevelled portion (3) is greater than the length of the horizontal section (5).

9. The agricultural machine (7, 70) according to any one of the preceding claims, **characterized in that** the chain links (2, 20, 200) are designed to be elastic, at least at their ends.

10. The agricultural machine (7, 70) according to Claim 1, **characterized in that** the barrel roller (30) is conically tapered toward both of its ends.

11. The agricultural machine (7, 70) according to Claim 1 or 10, **characterized in that** the chain links (2, 20, 200) make contact only with a part of the surface of the barrel roller (30).

12. The agricultural machine (7, 70) according to any one of Claims 1, 10 or 11, **characterized in that** the barrel roller (30) is arranged at the rear, as seen in the direction of travel (F).

13. The agricultural machine (7, 70) according to any one of Claims 1, 10 to 12, **characterized in that** the barrel roller (30) makes contact with the chain links (2, 20. 200) with its lower surface.

14. The agricultural machine (7, 70) according to any one of the preceding claims, **characterized in that** the chain drive (1, 11, 11', 11", 10, 100) has a circumferential elastic and flexible band (6) which is provided with a plurality of elastic and flexible chain links (200).

## Revendications

1. Engin agricole (7, 70) présentant au moins une transmission par chaîne (1, 11, 11', 11", 10, 100), en particulier réglable en hauteur, avec des maillons de chaîne (2, 20, 200), dans lequel les maillons de chaîne (2, 20, 200) sont réalisés au moins par endroits de manière biseautée et/ou au moins par endroits de manière flexible, **caractérisé en ce que** les maillons de chaîne (2, 20, 200) présentent, à leurs extrémités sur le côté, des zones biseautées réalisées de manière arrondie (3) et/ou que la transmission par chaîne (1, 11, 11', 11", 10, 100) présente un rouleau sphérique conique (30).

2. Engin agricole (7, 70) selon la revendication 1, **caractérisé en ce que** les maillons de chaîne (2, 20, 200) présentent, à leurs extrémités sur le côté, des zones flexibles (21).

3. Engin agricole (7, 70) selon la revendication 2, **caractérisé en ce que** les zones biseautées et/ou flexibles (3) sont réalisées de manière identique.

4. Engin agricole (7, 70) selon la revendication 2 ou 3, **caractérisé en ce que** les zones biseautées (3) sont réalisées avec un angle par rapport à l'horizontale, de préférence avec un angle > 1°, de manière particulièrement préférée > 5°, de manière très particulièrement préférée > 10°, de manière encore davantage préférée > 15°, de manière !a plus préférée > 20°.

5. Engin agricole (7. 70) selon l'une des revendications 2 à 4, **caractérisé en ce que** les zones biseautées (3) sont réalisées de manière arrondie.

6. Engin agricole (7, 70) selon l'une des revendications 2 à 5, **caractérisé en ce que** ies zones biseautées (3) sont réalisées de manière à se terminer en pointe vers l'extérieur.

7. Engin agricole (7, 70) selon l'une des revendications précédentes, **caractérisé en ce que** les maillons de chaîne (2, 20, 200) présentent, au milieu, une partie s'étendant horizontalement (5) avec une surface s'étendant horizontalement.

8. Engin agricole (7, 70) selon la revendication 7, **caractérisé en ce que**, par maillon de chaîne (2, 20, 200), la longueur des zones biseautées (3) est supérieure à la longueur de la partie horizontale (5).

9. Engin agricole (7, 70) selon l'une des revendications précédentes, **caractérisé en ce que** les maillons de chaîne (2, 20, 200) sont réalisés de manière élastique au moins à leurs extrémités.

10. Engin agricole (7, 70) selon la revendication 1, **caractérisé en ce que** le rouleau sphérique (30) se termine de manière conique à ses deux extrémités.

11. Engin agricole (7, 70) selon la revendication 1 ou 10, **caractérisé en ce que** les maillons de chaîne (2, 20, 200) reposent uniquement sur une partie de la surface du rouleau sphérique (30).

12. Engin agricole (7 70) selon l'une des revendications 1, 10 ou 11, **caractérisé en ce que** le rouleau sphérique (30) est disposé à l'arrière dans le sens de la marche (F).

13. Engin agricole (7, 70) selon l'une des revendications 1, 10 à 12, **caractérisé en ce que** le rouleau sphérique (30) entre en contact avec les maillons de chaîne (2, 20, 200) avec sa surface inférieure.

14. Engin agricole (7, 70) selon l'une des revendications précédentes, **caractérisé en ce que** la transmission par chaîne (1, 11, 11', 11", 10, 100) présente une bande périphérique flexible élastique (6), laquelle est dotée d'une pluralité de maillons de chaîne flexibles et élastiques (200).
